(19) Europäisches Patentamt
European Patent Office
Office européen des brevets

(11) **EP 3 591 826 B1**

(12) **EUROPEAN PATENT SPECIFICATION**

(45) Date of publication and mention
of the grant of the patent:
**24.02.2021 Bulletin 2021/08**

(51) Int Cl.:
*H02M 3/335* (2006.01)　　*H02M 1/34* (2007.01)
*H02M 1/08* (2006.01)　　*H02M 1/00* (2006.01)

(21) Application number: **19183833.3**

(22) Date of filing: **02.07.2019**

(54) **METHOD AND APPARATUS FOR CONTROLLING A FLYBACK CONVERTER**

VERFAHREN UND VORRICHTUNG ZUR STEUERUNG EINES SPERRWANDLERS

PROCÉDÉ ET APPAREIL POUR COMMANDER UN CONVERTISSEUR INDIRECT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2018 CN 201810718910**
**21.06.2019 CN 201910544717**

(43) Date of publication of application:
**08.01.2020 Bulletin 2020/02**

(73) Proprietor: **Delta Electronics (Shanghai) Co., Ltd.**
**Shanghai 201209 (CN)**

(72) Inventors:
 • **SONG, Haibin**
  **Shanghai, 201209 (CN)**
 • **XU, Daofei**
  **Shanghai, 201209 (CN)**
 • **ZHANG, Jinfa**
  **Shanghai, 201209 (CN)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A1- 3 107 199**　　**US-A1- 2005 073 861**
**US-A1- 2015 003 121**　　**US-A1- 2017 264 206**
**US-A1- 2018 062 529**

**Description**

FIELD OF THE INVENTION

The present invention relates to a method and an apparatus for controlling a flyback converter, and specifically to a method and an apparatus for controlling a flyback converter suitable for applications with variable output voltages.

BACKGROUND OF THE INVENTION

A flyback converter is a preferred topology for adapters due to its simple circuit schematic. However, its switching frequency is limited by turn-on losses of the main switch in the flyback converter. A conventional method for reducing the turn-on losses of the main switch is to achieve zero-voltage-switching (ZVS) of the main switch. The ZVS may be achieved by turning on an auxiliary switch for duration of time before the turn on of the main switch. The auxiliary switch may be an active clamp switch, or a switch connected to an auxiliary winding in series or a synchronous rectifier switch. Examples for flyback converters comprising active clamp circuits for operation under ZVS conditions, are given in EP3107199, US2017264206, US2005073861, US2018062529 and US2015003121.

In a conventional control scheme, a turn-on time of the auxiliary switch, and a dead time between the auxiliary switch and the main switch are both constant. However, such a control scheme is not suitable for applications with variable output voltages, which is the requirement of Universal Serial Bus Power Delivery (USB PD) in the future. Therefore, in order to optimize efficiency, the turn-on time of the auxiliary switch and the dead time are required to be variable in response to variations of an input voltage and an output voltage, thereby increasing the complexity of the controller. Moreover, with increasing switch frequency, the dead time becomes relatively smaller. Consequently, transmission delay and parameter tolerance of the controller become a huge obstacle for controlling variable dead time.

Therefore, there is a requirement for providing a method and an apparatus for controlling a flyback converter in order to solve the drawbacks of the conventional technologies.

SUMMARY OF THE INVENTION

In order to overcome the above-mentioned problems existing in the prior art, one aspect of the present disclosure is to provide a method according to claim for controlling a flyback converter, the flyback converter including a main switch, a transformer and an auxiliary switch. The method comprises: obtaining a first voltage signal and a second voltage signal, the first voltage signal representing an input voltage of the flyback converter, and the second voltage signal representing an output voltage of the flyback converter; controlling turn-on of the auxiliary switch, wherein the turn-on time period of the auxiliary switch is determined according to the first voltage signal and the second voltage signal, wherein controlling turn-on of the auxiliary switch further comprises: generating a third control signal SI3 and turning on the auxiliary switch according to the third control signal SI3, so as to generate a magnetizing current; generating a first control signal SI1 according to the first voltage signal, the second voltage signal and the third control signal SI3; and- turning off the auxiliary switch according to the first control signal SI1 at a time, when a product of the magnetizing current of the flyback converter and a characteristic impedance reaches the first voltage signal; and turning on the main switch at ZVS condition, wherein the main switch is turned on at the time delayed for a duration of a dead time after turning off of the auxiliary switch.

Another aspect of the present disclosure is to provide an apparatus according to claim 12 for controlling a flyback converter, the flyback converter including a main switch, a transformer and an auxiliary switch. The apparatus comprises: a sampling means for obtaining a first voltage signal and a second voltage signal, the first voltage signal representing an input voltage of the flyback converter, and the second voltage signal representing an output voltage of the flyback converter; a first operation means for controlling turn-on of the auxiliary switch, wherein a turn-on time period of the auxiliary switch is determined according to the first voltage signal and the second voltage signal, wherein the first operation means comprises: a signal unit configured to generate a third control signal SI3, wherein the third control signal SI3 is used for turning on the auxiliary switch, so as to generate a magnetizing current; and a timer configured to receive the first voltage signal, the second voltage signal and the third control signal SI3, and to output a first control signal SI1, wherein the first control signal SI1 is used for turning off the auxiliary switch at a time, when a product of the magnetizing current of the flyback converter and a characteristic impedance reaches the first voltage signal; and a second operation means for turning on the main switch at ZVS condition, wherein the main switch is turned on at the time delayed for a duration of a dead time after turning off of the auxiliary switch.

BRIEF DESCRIPTION OF THE DRAWINGS

Fig. 1 is an explanatory diagram showing a circuit schematic of a flyback converter according to a first embodiment of the present disclosure.

Fig. 2 is a flow chart showing a method for controlling the flyback converter according to an embodiment of the present disclosure.

Fig. 3a is a flow chart showing steps of the method in Fig. 2.

Fig. 3b is a flow chart showing steps of the method in Fig. 3a.

Fig. 4 is an explanatory diagram showing a schematic of a control device in the flyback converter according to the present disclosure.

Fig. 5 is an explanatory diagram showing a schematic of a timer in Fig. 4.

Fig. 6 is an explanatory diagram showing a schematic of a dead-time control unit in Fig. 4.

Fig. 7 is a waveform diagram of the flyback converter according to the present disclosure.

Figs. 8-9 are ZVS resonant state planes of the flyback converter under different load conditions by using the control method according to the present disclosure.

Fig. 10 is an explanatory diagram showing a circuit schematic of a flyback converter according to a second embodiment of the present disclosure.

Fig. 11 is an explanatory diagram showing a circuit schematic of a flyback converter according to a third embodiment of the present disclosure.

## DETAILED DESCRIPTION OF THE INVENTION

The present disclosure will be further described in detail with reference to the accompanying drawings and embodiments. Those embodiments are implemented according to the technical ideas of the present disclosure. Although specific configuration and processes are described in those embodiments, the protection extent of the present disclosure is not limited thereto.

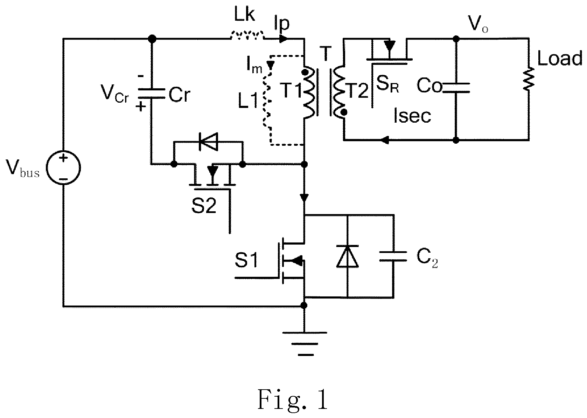

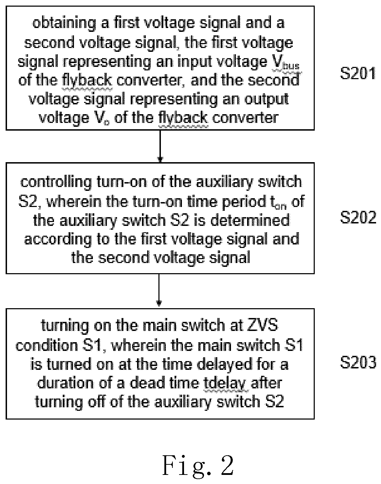

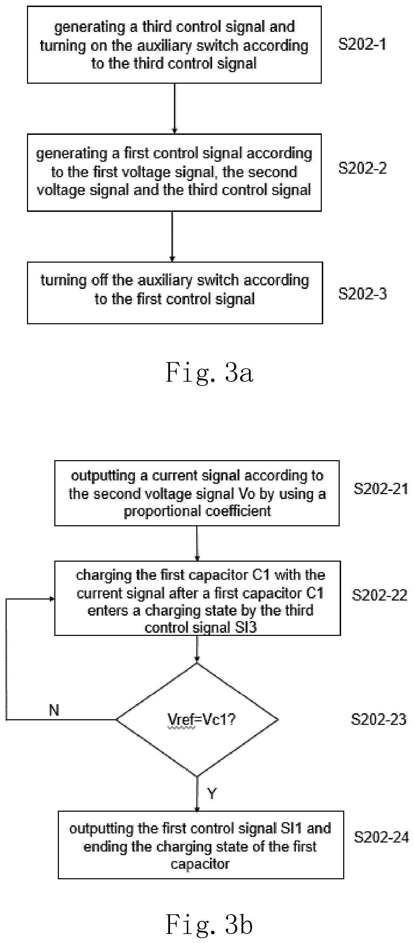

Referring to Figs. 1-3b, Fig. 1 is an explanatory diagram showing a circuit schematic of a flyback converter according to a first embodiment of the present disclosure; Fig. 2 is a flow chart showing a method for controlling the flyback converter; Fig. 3a is a flow chart showing steps of the method in Fig. 2; and Fig. 3b is a flow chart showing steps of the method in Fig. 3a.

As shown in Fig. 1, the flyback converter includes a main switch S1, a transformer T, and an auxiliary switch S2. The transformer T includes a primary winding T1 and a secondary winding T2. The main switch S1 has a first terminal electrically connected to a primary winding T1 of the transformer T, and a second terminal being grounded. The auxiliary switch S2 is a clamp switch in the active clamp flyback converter, and is connected to the primary winding T1 of the transformer T in parallel. In one embodiment, an inductor L1 may be an inductor of the primary winding T1.

As shown in Fig. 2, the method for controlling the flyback converter according to the present disclosure includes:

Step 201: obtaining a first voltage signal and a second voltage signal, the first voltage signal representing an input voltage $V_{bus}$ of the flyback converter, and the second voltage signal representing an output voltage $V_o$ of the flyback converter;

Step 202: controlling turn-on of the auxiliary switch S2, wherein the turn-on time period $t_{on}$ of the auxiliary switch S2 is determined according to the first voltage signal and the second voltage signal;

Step 203: turning on the main switch at ZVS condition S1, wherein the main switch S1 is turned on at the time delayed for a duration of a dead time $t_{delay}$ after turning off of the auxiliary switch S2. In some embodiments, the dead time $t_{delay}$ may be constant.

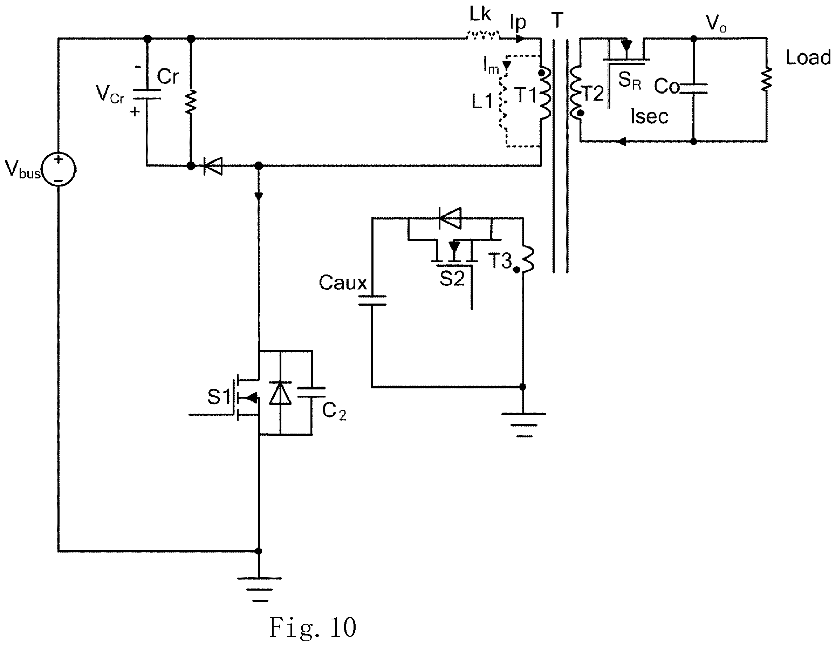

In this embodiment, the first voltage signal and the second voltage signal are obtained directly by sampling voltages at an input terminal and an output terminal of the flyback converter respectively in Step 201, but the present invention is not limited thereto. In other embodiments, the first voltage signal and the second voltage signal may be obtained indirectly. For example, as shown in Figs. 10-11, the first voltage signal may be obtained by sampling a negative voltage at an auxiliary winding T3 of the transformer T, and the second voltage signal may be obtained by sampling a positive voltage at the auxiliary winding T3 in Step 201. In still other embodiment, the synchronous rectifier switch SR may act as the auxiliary switch of the flyback converter and the first voltage signal may be obtained by sampling the voltage across the synchronous rectifier switch under off-state condition. Specific methods for obtaining the first voltage signal and the second voltage signal are not limited in the present invention, and may be designed by those skilled in the art as necessary.

Further, as shown in Fig.3a, step 202 may further include:

Step 202-1: generating a third control signal and turning on the auxiliary switch according to the third control signal;

Step 202-2: generating a first control signal according to the first voltage signal, the second voltage signal and the third control signal; and
Step 202-3: turning off the auxiliary switch according to the first control signal.

In one embodiment, step202 further includes: outputting a first drive signal $S_{sw}$ according to the third control signal SI3 and the first control signal SI1. The first drive signal $S_{sw}$ with a first level (for example but not limited to a high level) or a first edge (for example but not limited to a rising edge) is generated according to the first control signal SI1, so as to turn on the auxiliary switch S2. The first drive signal $S_{sw}$ with a second level (for example but not limited to a low level) or a second edge (for example but not limited to a falling edge) is generated according to the first control signal SI1, so as to turn off the auxiliary switch S2.

Further, as shown in Fig.3b, Step 202-2 may further include:

Step 202-21: outputting a current signal according to the second voltage signal $V_o$ by using a proportional coefficient;
Step 202-22: charging the first capacitor C1 with the current signal after a first capacitor C1 enters a charging state by the third control signal SI3;
Step 202-23: comparing a reference voltage $V_{ref}$ with a voltage at the first capacitor C1, wherein the reference voltage $V_{ref}$ is a voltage corresponding to a voltage of the first voltage signal $V_{bus}$. For example, the reference voltage may be a sampling voltage of the first voltage signal $V_{bus}$;
Step 202-24: outputting the first control signal SI1 and ending the charging state of the first capacitor when the voltage at the first capacitor C1 is the same as the reference voltage $V_{ref}$. wherein the turn-on time $t_{on}$ is a charging time of the first capacitor.

Refer to Fig.2, Further, in Step 203, the second control signal SI2 is generated at a time delayed for duration of the dead time $t_{delay}$ after the generation of the first control signal SI1.

Further, in Step 202-2, the proportional coefficient may be obtained according to the following formula:

$$\frac{C}{K} = \frac{\sqrt{L_m C_{eq}}}{n} \qquad \text{(Equation 1).}$$

Here, C indicates a capacitance value of the first capacitor C1; K indicates the proportional coefficient; $C_{eq}$ indicates a capacitance value of a parasitic capacitance C2 between the first terminal of the main switch S1 and ground; $L_m$ indicates an inductance value of the inductor L1 of the primary switch; and n indicates a turn ratio of the transformer T.

In Step 202, the turn-on time $t_{on}$ may be determined according to the following formula:

$$t_{on} = \frac{V_{bus}}{n V_o} \sqrt{L_m C_{eq}} \qquad \text{(Equation 2).}$$

Here, $t_{on}$ indicates the turn-on time of the auxiliary switch, Vbus indicates the voltage of the first voltage signal; $V_o$ indicates the voltage of the second voltage signal; $C_{eq}$ indicates the capacitance value of the parasitic capacitance C2 between the first terminal of the main switch S1 and the ground; $L_m$ indicates the inductance value of the inductor L1; and n indicates the turn ratio of the transformer T.

In Step 203, the dead time $t_{delay}$ may be obtained according to the following formula:

$$t_{delay} = \frac{\pi}{2} \sqrt{L_m C_{eq}} \qquad \text{(Equation 3).}$$

Here, $t_{delay}$ indicates the dead time between the turning off of the auxiliary switch S2 and the turning on of the main switch S1, $C_{eq}$ indicates the capacitance value of the parasitic capacitance C2 between the first terminal of the main switch S1 and ground; and Lm indicates the inductance value of the inductor L1.

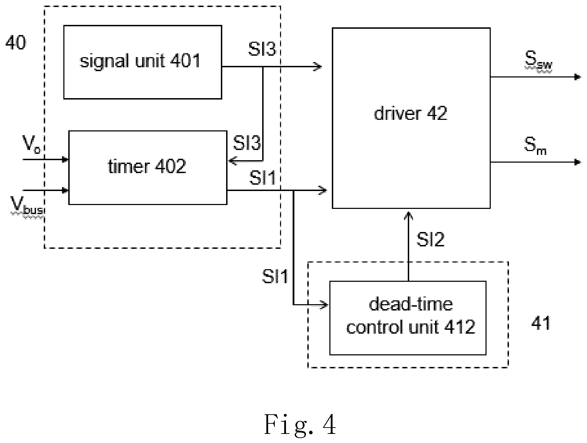

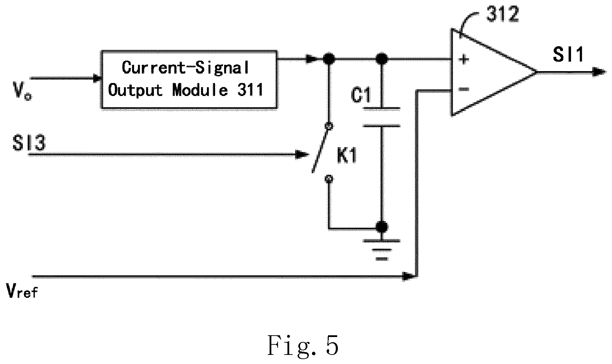

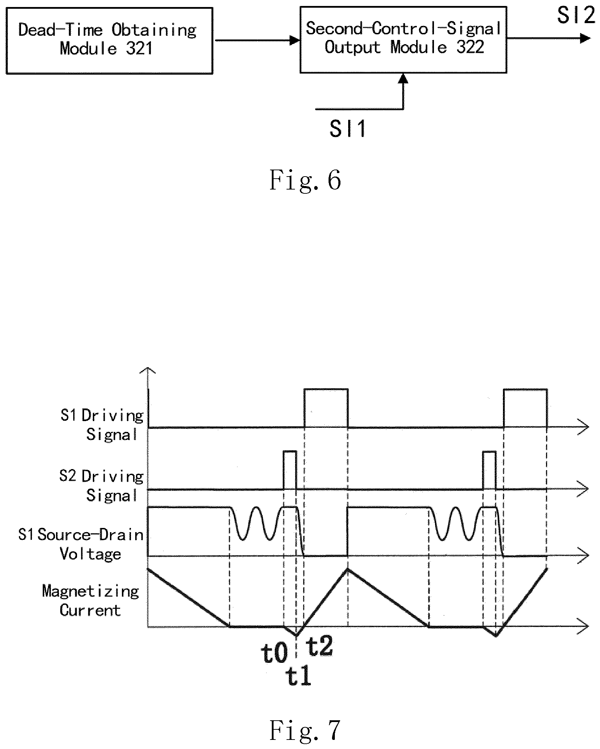

Now referring to Fig. 1 and Figs. 4-6, Fig. 4 is an explanatory diagram showing a schematic of a control device in the flyback converter according to the present disclosure; Fig. 5 is an explanatory diagram showing a schematic of a timer in Fig. 4; and Fig. 6 is an explanatory diagram showing a schematic of a dead-time control unit in Fig. 4.

As shown in Fig.4, the control device in the flyback converter according to the present disclosure includes a first operation means 40 and a second operation means 41.

The first operation means 40 for controlling turn-on of the auxiliary switch S2, wherein a turn-on time period $t_{on}$ of the auxiliary switch S2 is determined according to the first voltage signal and the second voltage signal. In one embodiment, the first voltage signal represents a signal according to an input voltage of the flyback converter, and the second voltage signal represents a signal according to an output voltage of the flyback converter.

The second operation means 41 for turning on the main switch S1 at ZVS condition, wherein the main switch S1 is turned on at the time delayed for a duration of a dead time $t_{delay}$ after turning off of the auxiliary switch S2.

As shown in Fig.4, the first operation means includes a signal unit 401 and a timer 402.

The signal unit 401 is configured to generate the third control signal SI3, wherein the third control signal SI3 is used for turning on the auxiliary switch S2. The signal unit 401 can be, but not be limited to, configured to generate the third control signal SI3 at the time when the magnetizing current of the flyback converter returns to zero.

The timer 402 receives the first voltage signal, the second voltage signal and the third control signal SI3, and outputs a first control signal SI1 to the controller 41, wherein the first control signal SI1 is used for turning off the auxiliary switch.

Refer to Fig.4 again, the second operation means 41 includes a dead-time control unit 412. The dead-time control unit 412 receives the first control signal SI1 and outputs a second control signal SI2 according to the first control signal SI1 and the dead time $t_{delay}$ so as to turn on the main switch S1 at ZVS (zero-voltage switching) condition. Here, the dead time $t_{delay}$ is constant.

In some embodiment, the control device can further include a driver 42. The controller 42 is configured to receive the third control signal SI3 and the first control signal SI1, and to output the first drive signal Ssw. The first drive signal $S_{sw}$ with a first level or a first edge is generated by the third control signal SI3 to turn on the auxiliary switch S2. And the first drive signal Ssw with a second level or a second edge is generated by the first control signal SI1 to turn off the auxiliary switch S2.

In this embodiment, the controller 41 may also output a second drive signal Sm according to second control signal SI2, so as to turn on the main switch S1.

In some embodiment, the driver can be for example but not limited to a RS flip-flop.

In one embodiment, there is also a sampling means (not shown) configured to output a third control signal SI3. The sampling means for obtaining a first voltage signal and a second voltage signal, the first voltage signal representing an input voltage of the flyback converter, and the second voltage signal representing an output voltage of the flyback converter.

In one embodiment, the sampling means can directly obtain the first voltage signal and the second voltage signal by sampling the voltage at the input terminal and output terminal of the flyback converter respectively. In other embodiment, the sampling means can indirectly obtain the first voltage signal and the second voltage signal by sampling a negative voltage at an auxiliary winding T3 of the transformer T and a positive voltage at the auxiliary winding T3 respectively. In still other embodiment, the synchronous rectifier switch SR may act as the auxiliary switch of the flyback converter and the sampling means can directly obtain the first voltage signal by sampling the voltage across the synchronous rectifier switch under off-state condition.

Further, as shown in Fig. 5, the timer 402 includes a current-signal output module 311, a first capacitor C1, a first control switch K1, and a comparison module 312. The first capacitor C1 has a first terminal electrically connected to the current-signal output module 311, and a second terminal being grounded. The first control switch K1 is connected to the first capacitor C1 in parallel, and may be turned off depending on the third control signal SI3. The comparison module 312 has a first input terminal electrically connected to the first terminal of the first capacitor C1 and the current-signal output module 311, and a second input terminal for receiving the reference voltage $V_{ref}$, wherein the reference voltage $V_{ref}$ is a voltage corresponding to a voltage of the first voltage signal Vbus. For example, the reference voltage may be a sampling voltage of the first voltage signal $V_{bus}$.

The current-signal output module 311 outputs a current signal according to the second voltage signal (e.g., Vo in Fig. 5) by using a proportional coefficient. When the first control switch K1 is turned off according to the third control signal SI3, the first capacitor C1 enters a charging state in which the first capacitor C1 is charged with the current signal.

The comparison module 312 compares the reference voltage $V_{ref}$ with the voltage at the first capacitor C1. When the voltage at the first capacitor C1 is the same as the reference voltage $V_{ref}$, the comparison module 312 outputs the first control signal SI1, so as to turn off the auxiliary switch S2. And then the first capacitor ends the charging state. The turn-on time $t_{on}$ is the charging time of the first capacitor.

In this embodiment, the proportional coefficient used by the current-signal output module 311 may be obtained according to the above-mentioned Equation 1.

Further, in this embodiment, the turn-on time $t_{on}$ may be obtained according to the above-mentioned Equation 2.

Fig. 6 is an explanatory diagram showing a schematic of a dead-time control unit in Fig. 4. As shown in Fig. 6, the dead-time control unit 412 includes a dead-time obtaining module 321 and a second-control-signal output module 322. The dead-time obtaining module 321 obtains the dead time $t_{delay}$. The second-control-signal output module 322 is electrically connected to the dead-time obtaining module 321. The second control signal SI2 is generated at a time delayed for duration of the dead time $t_{delay}$ after the generation of the first control signal SI1, so that the main switch S1 is turned on. In this embodiment, the dead-time obtaining module 321 is a time delayer, but the present invention is not limited thereto.

In this embodiment, the dead time $t_{delay}$ may be obtained according to the above-mentioned Equation 3.

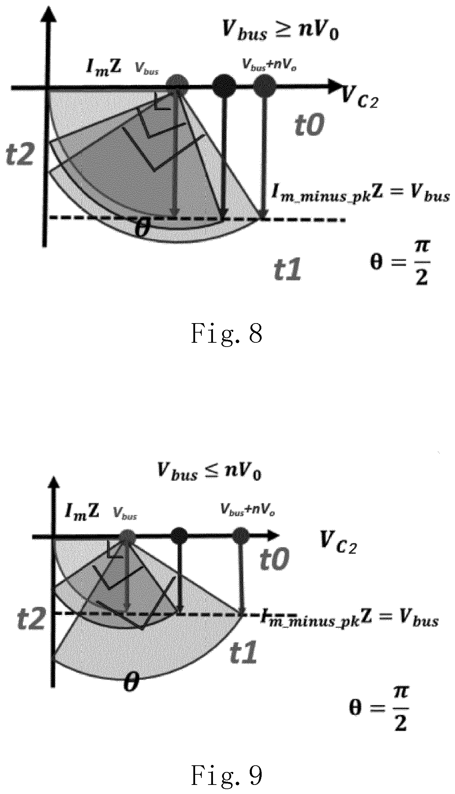

Fig. 7 is a waveform diagram of the flyback converter according to the present disclosure. Figs. 8-9 are ZVS resonant state planes of the flyback converter under different load conditions by using the control method according to the present disclosure. Below, principles of a method and an apparatus for controlling the auxiliary switch of the flyback converter in the present disclosure will be described in detail with reference to Fig. 1 and Figs. 7-9.

In order to achieve the ZVS of the main switch S1 in the flyback converter, it is necessary that the auxiliary switch S2 has been turned on for duration of time before the main switch S 1 is turned on, so as to generate a negative magnetizing current. In order to allow a source-drain voltage $V_{DS}$ of the main switch S1 down to zero with the amplitude of the generated magnetizing current, it is required that the turn-on time $t_{on}$ of the auxiliary switch S2 and the corresponding dead time $t_{delay}$ satisfy the following formula, respectively:

$$t_{on} = \sqrt{L_m C_{eq}} \times \sqrt{\frac{V_{bus}^2 - (nV_o)^2}{(nV_o)^2}} \quad \text{(Equation 4)},$$

$$t_{delay} = \theta \times \sqrt{L_m C_{eq}} \quad \text{(Equation 5)}.$$

Here, $\theta$ is a phase angle, and may satisfy the following formulas:

$$\theta = \pi - \cos^{-1} \frac{nV_o}{V_{bus}},$$

when Vbus > nVo; and

$$\theta = \pi - \cos^{-1} \frac{V_{bus}}{nV_o},$$

when Vbus ≤ nVo.

From the above formulas, it may be understood that, in the prior art, the turn-on time of the auxiliary switch and the corresponding dead time need to be adjusted according to the input voltage and the output voltage. The control is complicated and is especially not suitable for the high frequency design.

In contrast, the turn-on time $t_{on}$ of the auxiliary switch S2 in the present disclosure may be obtained according to the above-mentioned Equation 2. Referring to Equation 2, although the turn-on time $t_{on}$ of the auxiliary switch S2 is still relevant to the input voltage and the output voltage, the relationship between them becomes a simple proportional relation. Therefore, the turn-on time $t_{on}$ of the auxiliary switch S2 may be easily regulated according to the circuit parameters of the flyback circuit.

Additionally, according to the above turn-on time $t_{on}$ of the auxiliary switch S2, the above-mentioned Equation 3 for the corresponding dead time $t_{delay}$ may be obtained.

As shown in Fig. 7, t0-t1 is the duration of the turn-on time $t_{on}$ of the auxiliary switch S2, while t1-t2 is the duration of the dead time $t_{delay}$. According to the method and the apparatus for controlling an auxiliary switch in the present disclosure, at time t0, the auxiliary switch S2 is turned on, such that a voltage $nV_o$ is applied to the inductor L1 in the transformer T so as to generate the magnetizing current $I_m$. Then, at time t1, the auxiliary switch S2 is turned off, such that the inductor L1 and the parasitic capacitance C2 resonate. As a result, the source-drain voltage $V_{DS}$ of the main switch S1 starts to decrease. With the aid of the magnetizing current Im, the voltage $V_{DS}$ is decreased to zero at time t2. At time t2, the main switch S1 is turned on. In this way, ZVS may be achieved.

Figs. 8-9 are resonant state planes of the flyback converter when $V_{bus}$ is greater than $n*V_o$, and when $V_{bus}$ is less than or equal to $n*V_o$, respectively. Here, the horizontal axis indicates a voltage $V_{Ceq}$ of the parasitic capacitance C2, which is equivalent to the source-drain voltage $V_{DS}$ of the main switch S1. The vertical axis indicates a product of the magnetizing current $I_m$ and a characteristic impedance Z.

Referring to Fig. 7 and Figs. 8-9, at time t0, the auxiliary switch S2 is turned on. The voltage at C2 is $Vbus+nV_o$. The magnetizing current $I_m$ starts to negatively increase from 0. Then, at time t1, the product of the magnetizing current $I_m$ and the characteristic impedance Z reaches Vbus. The auxiliary switch S2 is turned off. Then, starting from time t1, the inductor L1 and the parasitic capacitance Ceq start to resonate. Then, at time t2, the voltage at C2 becomes equivalent to the source-drain voltage $V_{DS}$. At this time, $V_{DS}$ is 0.

As can be seen from the state locus diagram from t1 to t2, there is an arched trace with a radian of $\pi/2$. Further,

a resonant period of the inductor L1 and the parasitic capacitance C2 may be expressed as $2\pi\sqrt{L_m C_{eq}}$ ,

which corresponds to a circumference in the state locus diagram. Consequently, since the duration from t1 to t2 (i.e., the dead time) is a quarter of the resonant cycle, the above-mentioned Equation 3 may be deduced.

Referring to Figs. 8 and 9 again, there are three dots on the horizontal axis which represent a light load, a moderate load and a heavy load, respectively, along a direction of the horizontal axis. As can be seen, in any case of the above three loads, it is ensured that the duration from t1 to t2 (i.e., the dead time) is a quarter of the resonant cycle, and may be expressed by the above-mentioned Equation 3.

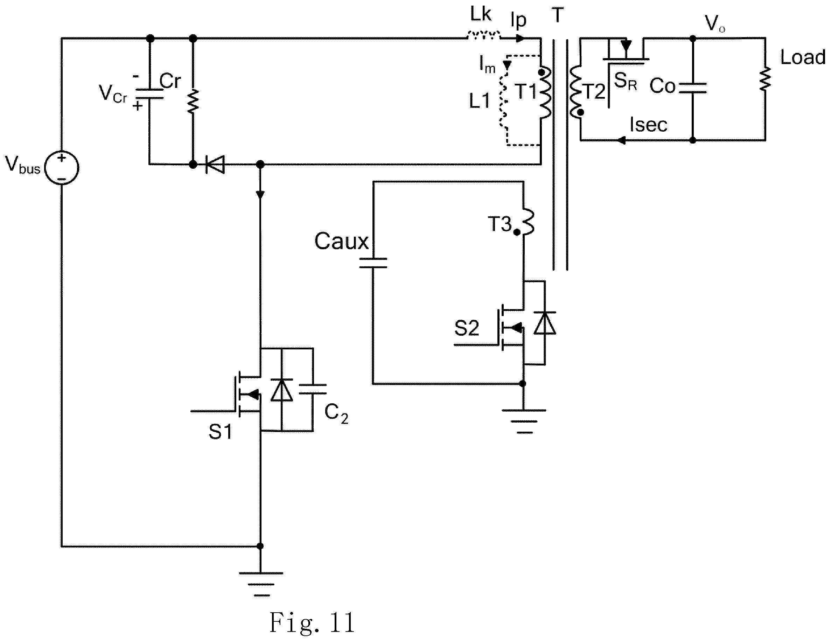

The previous embodiment is described by taking an active clamp flyback converter shown in Fig. 1 as an example, in which the auxiliary switch is a clamp switch in the active clamp flyback converter. However, the present invention is not limited thereto. The control method and apparatus according to the present disclosure may be alternatively applied to flyback converters of other schematics. For example, as shown in Figs. 10 and 11, the flyback converter may further include an auxiliary winding T3, an auxiliary switch S2 and an auxiliary capacitance Caux. The auxiliary switch S2, the auxiliary capacitance Caux and the auxiliary winding T3 are connected in series. In this embodiment, principles and operations of the control method and the control apparatus of the flyback converter are the same as those in the previous embodiments. Accordingly, detailed description is omitted. In other application, the auxiliary switch may be a synchronous rectifier switch SR. Principles and operations of the control method and the control apparatus of the flyback converter are almost the same as those in the previous embodiments, except that the first voltage signal may be obtained by sampling a voltage at the synchronous rectifier switch SR.

The present invention may provide a constant dead time in the flyback converter by setting the turn-on time of the auxiliary switch. Additionally, the present invention may implement zero-voltage-switching (ZVS) of the main switch within a full range of loads at different output voltages with respect to a full range of input voltage (e.g., 90~264Vac), and may implement optimized designs efficiently.

Note that the above embodiments are only used to illustrate the present disclosure but not to limit the technical solution described in the present disclosure. Moreover, although the present disclosure is described in detail with reference to the above embodiments in this specification, the ordinary persons skilled in the art should understand that modifications or equivalent substitutions may also be made to the present disclosure within the protection scope of the appended claims in the present application.

**Claims**

1. A method for controlling a flyback converter, the flyback converter including a main switch (S1), a transformer (T) and an auxiliary switch (S2), the method comprising:

    obtaining (201) a first voltage signal and a second voltage signal, the first voltage signal representing an input voltage (Vbus) of the flyback converter, and the second voltage signal representing an output voltage (Vo) of the flyback converter;
    controlling (202) turn-on of the auxiliary switch, wherein the turn-on time period of the auxiliary switch is determined according to the first voltage signal (Vbus) and the second voltage signal (Vo),

    wherein controlling (S202) turn-on of the auxiliary switch (S2) further comprises:

    generating (S202-1) a third control signal SI3 and turning on the auxiliary switch (S2) according to the third control signal SI3, so as to generate a magnetizing current (Im);
    generating (S202-2) a first control signal SI1 according to the first voltage signal (Vbus), the second voltage signal (Vo) and the third control signal SI3; and

turning off (S202-3) the auxiliary switch (S2) according to the first control signal SI1 at a time (t1), when a product of the magnetizing current (Im) of the flyback converter and a characteristic impedance (Z) reaches the first voltage signal (Vbus); and

turning on (203) the main switch at ZVS condition, wherein the main switch (S1) is turned on at a time (t2) delayed for a duration of a dead time after turning off of the auxiliary switch.

2. The control method according to claim 1, wherein

the auxiliary switch is an active clamp switch for the flyback converter, or

the transformer further comprises an auxiliary winding connected to the auxiliary switch in series, or

the flyback converter further comprises a synchronous rectifier switch as the auxiliary switch.

3. The control method according to claim 2, wherein the first voltage signal is obtained by sampling a negative voltage at the auxiliary winding, and the second voltage signal is obtained by sampling a positive voltage at the auxiliary winding.

4. The control method according to claim 2, wherein the first voltage signal is obtained by sampling a voltage across the synchronous rectifier switch under off-state condition.

5. The control method according to claim 1, wherein the turn-on time period is determined according to the following formula:

$$t_{on} = \frac{V_{bus}}{nV_o} \sqrt{L_m C_{eq}}$$

wherein $t_{on}$ indicates the turn-on time period of the auxiliary switch, Vbus indicates a voltage of the first voltage signal; $V_o$ indicates a voltage of the second voltage signal; $C_{eq}$ indicates a capacitance value of a parasitic capacitance between a first terminal of the main switch and ground; $L_m$ indicates an inductance value of an inductor of a primary winding of the transformer; and n indicates a turn ratio of the transformer.

6. The control method according to claim 1, wherein the dead time is constant.

7. The control method according to claim 6, wherein the dead time is determined according to the following formula:

$$t_{delay} = \frac{\pi}{2} \sqrt{L_m C_{eq}}$$

wherein $t_{delay}$ indicates the dead time, $C_{eq}$ indicates a capacitance value of a parasitic capacitance between the first terminal of the main switch and ground; and $L_m$ indicates an inductance value of an inductor of a primary winding of the transformer.

8. The control method according to claim 1, wherein turning on the main switch (S203) further comprises:
outputting a second control signal according to the first control signal and the dead time and turning on the main switch at a zero-voltage switching condition according to the second control signal.

9. The control method according to claim 1, generating the first control signal according to the first voltage signal, the second voltage signal and the third control signal (S202-2) further comprising:

outputting a current signal according to the second voltage signal by using a proportional coefficient (S202-21);
charging the first capacitor with the current signal after a first capacitor enters a charging state by the third control signal (S202-22);
comparing a reference voltage with a voltage at the first capacitor (S202-23); and
outputting the first control signal and ending the charging state of the first capacitor when the voltage at the first capacitor is the same as the reference voltage, wherein the reference voltage is a voltage corresponding to the first voltage signal (S202-24).

**10.** The control method according to claim 9, wherein the main switch has a first terminal electrically connected to a primary winding of the transformer, and a second terminal being grounded, and
the proportional coefficient is obtained according to the following formula:

$$\frac{C}{K} = \frac{\sqrt{L_m C_{eq}}}{n}$$

wherein C indicates a capacitance value of the first capacitor; K indicates the proportional coefficient; $C_{eq}$ indicates a capacitance value of a parasitic capacitance between the first terminal of the main switch and ground; $L_m$ indicates an inductance value of an inductor of a primary winding (T1) of the transformer (T); and n indicates a turn ratio of the transformer.

**11.** The control method according to claim 1, wherein controlling turn-on of the auxiliary switch (S202) further comprising:

outputting a first drive signal with a first level or a first edge according to the third control signal and turning on the auxiliary switch according to the first drive signal with the first level or a first edge; and
outputting the first drive signal with a second level or a second edge according to the first control signal and turning off the auxiliary switch according to the first drive signal with the second level or a second edge.

**12.** An apparatus configured to control a flyback converter, the flyback converter including a main switch (S1), a transformer (T) and an auxiliary switch (S2), the apparatus comprising:

a sampling means configured to obtain a first voltage signal and a second voltage signal, the first voltage signal representing an input voltage (Vbus) of the flyback converter, and the second voltage signal representing an output voltage (Vo) of the flyback converter;
a first operation means (40) configured to control turn-on of the auxiliary switch (S2), wherein a turn-on time period $t_{on}$ of the auxiliary switch (S2) is determined according to the first voltage signal and the second voltage signal, wherein the first operation means (40) comprises:

a signal unit (401) configured to generate a third control signal SI3, wherein the third control signal SI3 is used for turning on the auxiliary switch (S2), so as to generate a magnetizing current (Im); and
a timer (402) configured to receive the first voltage signal, the second voltage signal and the third control signal SI3, and to output a first control signal SI1, wherein the first control signal SI1 is used for turning off the auxiliary switch (S2) at a time (t1), when a product of the magnetizing current (Im) of the flyback converter and a characteristic impedance (Z) reaches the first voltage signal (Vbus); and

a second operation means (41) configured to turn on the main switch (S1) at ZVS condition, wherein the main switch (S1) is turned on at a time (t2) delayed for a duration of a dead time after turning off of the auxiliary switch (S2).

**13.** The apparatus according to claim 12, wherein
the auxiliary switch (S2) is an active clamp switch in the flyback converter, or
the transformer (T) further comprises an auxiliary winding (T3) connected to the auxiliary switch (S2) in series, or
the flyback converter further comprises a synchronous rectifier switch as the auxiliary switch (S2).

**14.** The apparatus according to claim 12, wherein the sampling means is configured to obtain the first voltage signal and the second voltage signal by sampling voltages at an input terminal and an output terminal of the flyback converter respectively.

**15.** The apparatus according to claim 12, wherein the sampling means is configured to obtain the first voltage signal by sampling a negative voltage at the auxiliary winding (T3), and to obtain the second voltage signal by sampling a positive voltage at the auxiliary winding (T3).

16. The apparatus according to claim 12, wherein the sampling means is configured to obtain the first voltage signal by sampling a voltage across the synchronous rectifier switch under off-state condition.

17. The apparatus according to claim 12, wherein the turn-on time period is determined according to the following formula:

$$t_{on} = \frac{V_{bus}}{nV_o} \sqrt{L_m C_{eq}}$$

wherein $t_{on}$ indicates the turn-on time period of the auxiliary switch (S2), Vbus indicates the voltage of the first voltage signal; $V_o$ indicates the voltage of the second voltage signal; $C_{eq}$ indicates a capacitance value of a parasitic capacitance between a first terminal of the main switch (S1) and ground; $L_m$ indicates an inductance value of an inductor of a primary winding (T1) of the transformer (T); and n indicates a turn ratio of the transformer (T).

18. The apparatus according to claim 12, wherein the dead time is constant.

19. The apparatus according to claim 18, wherein the dead time is determined according to the following formula:

$$t_{delay} = \frac{\pi}{2} \sqrt{L_m C_{eq}}$$

wherein $t_{delay}$ indicates the dead time, $C_{eq}$ indicates a capacitance value of a parasitic capacitance between the first terminal of the main switch (S1) and ground; and $L_m$ indicates an inductance value of an inductor of a primary winding (T1) of the transformer (T).

20. The apparatus according to claim 12, wherein the timer (402) comprises:

a current-signal output module (311) configured to output a current signal according to the second voltage signal by using a proportional coefficient;
a first capacitor (C1) having a first terminal electrically connected to the current-signal output module (311), and a second terminal being grounded;
a first control switch (K1) electrically connected to the first capacitor (C1) in parallel and configured to control the first capacitor (C1) to enter a charging state by the third control signal SI3; and
a comparison module (312) having a first input terminal electrically connected to the first terminal of the first capacitor (C1), and a second input terminal for receiving a reference voltage corresponding to the first voltage signal, the comparison module (312) being configured to compare the reference voltage with a voltage at the first capacitor (C1);
wherein the comparison module (312) is configured to output the first control signal and the first capacitor (C1) ends the charging state when the voltage at the first capacitor (C1) is the same as the reference voltage; and
wherein the turn-on time period is a charging time of the first capacitor (C1).

21. The apparatus according to claim 20, wherein the main switch (S1) has a first terminal electrically connected to a primary winding (T1) of the transformer (T), and a second terminal being grounded, and
the proportional coefficient is obtained according to the following formula:

$$\frac{C}{K} = \frac{\sqrt{L_m C_{eq}}}{n}$$

wherein C indicates a capacitance value of the first capacitor (C1); K indicates the proportional coefficient; $C_{eq}$ indicates a capacitance value of a parasitic capacitance between the first terminal of the main switch (S1) and ground; $L_m$ indicates an inductance value of an inductor of a primary winding (T1) of the transformer (T); and n indicates a turn ratio of the transformer (T).

**22.** The apparatus according to claim 12, wherein the second operation means (41) comprises:

a dead-time control unit (412) configured to receive the first control signal SI1, and to output a second control signal SI2 according to the first control signal SI1 and the dead time, wherein the second control signal SI2 is used for turning on the main switch (S1) at a zero-voltage switching condition.

**23.** The apparatus according to claim 22, wherein the dead-time control unit (412) comprises:

a dead-time obtaining module (321) configured to obtain the dead time; and
a second-control-signal output module (322) electrically connected to the dead-time obtaining module (321), and configured to receive the first control signal SI1 and the dead-time and to output a second control signal SI2.

**24.** The apparatus according to claim 12, wherein the apparatus further comprises:
a driver (42) configured to receive the third control signal SI3 and the first control signal SI1, and to output the first drive signal Ssw, wherein the first drive signal Ssw with a first level or a first edge is generated by the third control signal SI3 to turn on the auxiliary switch (S2) and the first drive signal Ssw with a second level or a second edge is generated by the first control signal SI1 to turn off the auxiliary switch (S2).

**Patentansprüche**

**1.** Verfahren zum Steuern eines Flyback-Konverters, wobei der Flyback-Konverter einen Hauptschalter (S1), einen Transformator (T) und einen Hilfsschalter (S2) enthält, wobei das Verfahren aufweist:

ein erstes Spannungssignal und ein zweites Spannungssignal werden erhalten (201), wobei das erste Spannungssignal eine Eingangsspannung (Vbus) des Flyback-Konverters darstellt, und das zweite Spannungssignal eine Ausgangsspannung (Vo) des Flyback-Konverters darstellt;
das Einschalten des Hilfsschalters wird gesteuert (202), wobei die Einschaltzeitperiode des Hilfsschalters gemäß dem ersten Spannungssignal (Vbus) und dem zweiten Spannungssignal (Vo) bestimmt wird,
wobei das Steuern (S202) des Einschaltens des Hilfsschalters (S2) ferner aufweist:

ein drittes Steuersignal SI3 wird erzeugt (S202-1) und der Hilfsschalter (S2) wird gemäß dem dritten Steuersignal SI3 eingeschaltet, um so einen Magnetisierungsstrom (Im) zu erzeugen;
ein erstes Steuersignal SI1 wird gemäß dem ersten Spannungssignal (Vbus), dem zweiten Spannungssignal (Vo) und dem dritten Steuersignal SI3 erzeugt (S202-2); und
der Hilfsschalter (S2) wird gemäß dem ersten Steuersignal SI1 zu einer Zeit (t1) ausgeschaltet (S202-3), wenn ein Produkt des Magnetisierungsstroms (Im) des Flyback-Konverters und eine charakteristische Impedanz (Z) das erste Spannungssignal (Vbus) erreichen; und
der Hauptschalter wird bei der ZVS-Bedingung eingeschaltet (203), wobei der Hauptschalter (S1) zu einer Zeit (t2) verzögert um eine Dauer einer Totzeit nach Ausschalten des Hilfsschalters eingeschaltet wird.

**2.** Steuerverfahren nach Anspruch 1, wobei der Hilfsschalter ein aktiver Klemmschalter für den Flyback-Konverter ist, oder
der Transformator ferner eine Hilfswicklung aufweist, die in Reihe an den Hilfsschalter angeschlossen ist, oder
der Flyback-Konverter weist ferner einen synchronen Gleichrichterschalter als den Hilfsschalter auf.

**3.** Steuerverfahren nach Anspruch 2, wobei das erste Spannungssignal durch Abtasten einer negativen Spannung an der Hilfswicklung erhalten wird, und das zweite Spannungssignal durch Abtasten einer positiven Spannung an der Hilfswicklung erhalten wird.

**4.** Steuerverfahren nach Anspruch 2, wobei das erste Spannungssignal durch Abtasten einer Spannung, die über den synchronen Gleichrichterschalter unter einer ausgeschalteten Bedingung anliegt, erhalten wird.

**5.** Steuerverfahren nach Anspruch 1, wobei die Einschaltzeitperiode gemäß der folgenden Formel bestimmt wird:

$$t_{on} = \frac{V_{bus}}{nV_o}\sqrt{L_m C_{eq}}$$

wobei $t_{on}$ die Einschaltzeitperiode des Hilfsschalters anzeigt, $V_{bus}$ eine Spannung des ersten Spannungssignales anzeigt; $V_o$ eine Spannung des zweiten Spannungssignals anzeigt; $C_{eq}$ einen Kapazitanzwert einer parasitären Kapazitanz zwischen einem ersten Anschluss des Hauptschalters und Erde anzeigt; $L_m$ einem Induktanzwert eines Induktors einer primären Windung des Transformators anzeigt; und n ein Drehverhältnis bzw. ein Windungsverhältnis des Transformators anzeigt.

6. Steuerverfahren nach Anspruch 1, wobei die Totzeit eine Konstante ist.

7. Steuerverfahren nach Anspruch 6, wobei die Totzeit gemäß der folgenden Formel bestimmt wird:

$$t_{delay} = \frac{\pi}{2}\sqrt{L_m C_{eq}}$$

wobei $t_{delay}$ die Totzeit anzeigt, $C_{eq}$ einen Kapazitanzwert einer parasitären Kapazitanz zwischen dem ersten Anschluss des Hauptschalters und Erde anzeigt; und Lm einen Induktanzwert eines Induktors einer primären Windung des Transformators anzeigt.

8. Steuerverfahren nach Anspruch 1, wobei das Einschalten des Hauptschalters (S203) ferner aufweist:
ein zweites Steuersignal wird gemäß dem ersten Steuersignal und der Totzeit ausgegeben und der Hauptschalter wird bei einer Schaltbedingung mit Nullspannung gemäß dem zweiten Steuersignal eingeschaltet.

9. Steuerverfahren nach Anspruch 1, wobei das erste Steuersignal gemäß dem ersten Spannungssignal, dem zweiten Spannungssignal und dem dritten Spannungssignal (S202-2) erzeugt wird, das ferner aufweist:

ein Stromsignal wird gemäß dem zweiten Spannungssignal ausgegeben, indem ein Proportionalkoeffizient (S202-21) verwendet wird;
ein erster Kondensator wird mit dem Stromsignal geladen, nachdem ein erster Kondensator in einen Ladezustand durch das dritte Steuersignal (S202-22) eintritt;
eine Bezugsspannung wird mit einer Spannung an dem ersten Kondensator (S202-23) verglichen;
das erste Steuersignal wird ausgegeben und der Ladezustand des ersten Kondensators wird beendet, wenn die Spannung an dem ersten Kondensator die gleiche wie die Bezugsspannung ist, wobei die Bezugsspannung eine Spannung entsprechend dem ersten Spannungssignal (S202-24) ist.

10. Steuerverfahren nach Anspruch 9, wobei der Hauptschalter einen ersten Anschluss hat, der elektrisch an eine primäre Wicklung des Transformators angeschlossen ist, und ein zweiter Anschluss ist geerdet, und der Proportionalkoeffizient wird gemäß der folgenden Formel erhalten:

$$\frac{C}{K} = \frac{\sqrt{L_m C_{eq}}}{n}$$

wobei C einen Kapazitätswert des ersten Kondensators anzeigt; K den Proportionalkoeffizienten anzeigt; $C_{eq}$ einen Kapazitätswert einer parasitären Kapazität zwischen dem ersten Anschluss des Hauptschalters und Erde anzeigt; $L_m$ einen Induktanzwert von einem Induktor einer primären Wicklung (T1) des Transformators (T) anzeigt; und n ein Windungsverhältnis des Transformators anzeigt.

11. Steuerverfahren nach Anspruch 1, wobei das Steuern des Einschaltens des Hilfsschalters (S202) ferner aufweist:

ein erstes Treibersignal mit einem ersten Niveau oder eine erste Flanke gemäß dem dritten Steuersignal wird ausgegeben und der Hilfsschalter wird gemäß dem ersten Treibersignal mit dem ersten Niveau oder einer ersten Flanke eingeschaltet; und

das erste Treibersignal wird mit einem zweiten Niveau oder einer zweiten Flanke gemäß dem ersten Steuersignal ausgegeben und der Hilfsschalter wird gemäß dem ersten Treibersignal mit dem zweiten Niveau oder einer zweiten Flanke ausgeschaltet.

12. Vorrichtung, die konfiguriert ist, um zu steuern:

  einen Flyback-Konverter, wobei der Flyback-Konverter einen Hauptschalter (S1), einen Transformator (T) und einen Hilfsschalter (S2) enthält, wobei die Vorrichtung aufweist:

    eine Abtasteinrichtung, die konfiguriert ist, um ein erstes Spannungssignal und ein zweites Spannungssignal zu erhalten, wobei das erste Spannungssignal eine Eingangsspannung (Vbus) des Flyback-Konverters darstellt, und das zweite Spannungssignal eine Ausgangsspannung (Vo) des Flyback-Konverters darstellt;
    eine erste Betriebseinrichtung (40), die konfiguriert ist, um das Einschalten des Hilfsschalters zu steuern, wobei eine Einschaltzeitdauer ($t_{on}$) des Hilfsschalters (S2) gemäß dem ersten Spannungssignal und dem zweiten Spannungssignal bestimmt wird,

    wobei die erste Betriebseinrichtung (40) aufweist:

      eine Signaleinheit (401), die konfiguriert ist, um ein drittes Steuersignal SI3 zu erzeugen, wobei das dritte Steuersignal SI3 verwendet wird, um den Hilfsschalter (S2) einzuschalten, um so einen Magnetisierungsstrom (Im) zu erzeugen, und
      einen Zeitgeber (402), der konfiguriert ist, um das erste Spannungssignal, das zweite Spannungssignal und das dritte Steuersignal SI3 zu empfangen, und um ein erstes Steuersignal SI1 auszugegeben, wobei das erste Steuersignal SI1 verwendet wird, um den Hilfsschalter (S2) zu einer Zeit (t1) auszuschalten, wenn ein Produkt des Magnetisierungsstroms (Im) des Flyback-Konverters und eine charakteristische Impedanz (Z) das erste Spannungssignal (Vbus) erreichen; und
      eine zweite Betriebseinrichtung (41), die konfiguriert ist, um den Hauptschalter (S1) bei einer ZVS-Bedingung einzuschalten, wobei der Hauptschalter (S1) zu einer Zeit (t2) verzögert um eine Dauer einer Totzeit nach dem Ausschalten des Hilfsschalters (S2) eingeschaltet wird.

13. Vorrichtung nach Anspruch 12, wobei
  der Hilfsschalter (S2) ein aktiver Klemmschalter in dem Flyback-Konverter ist, oder
  der Transformator (T) ferner aufweist, eine Hilfswicklung (T3), die in Reihe an den Hilfsschalter (S2) angeschlossen ist, oder
  der Flyback-Konverter weist ferner einen synchronen Gleichrichterschalter als den Hilfsschalter (S2) auf.

14. Vorrichtung nach Anspruch 12, wobei die Abtasteinrichtung konfiguriert ist, um das erste Spannungssignal und das zweite Spannungssignal durch Abtasten von Spannungen an einem Eingangsanschluss bzw. einem Ausgangsanschluss des Flyback-Konverters zu erhalten.

15. Vorrichtung nach Anspruch 12, wobei die Abtasteinrichtung konfiguriert ist, um das erste Spannungssignal durch Abtasten einer negativen Spannung an der Hilfswicklung (T3) zu erhalten, und um das zweite Spannungssignal durch Abtasten einer positiven Spannung an der Hilfswicklung (T3) zu erhalten.

16. Vorrichtung nach Anspruch 12, wobei die Abtasteinrichtung konfiguriert ist, um das erste Spannungssignal durch Abtasten einer Spannung über den synchronen Gleichrichterschalter unter einer ausgeschalteten Bedingung zu erhalten.

17. Vorrichtung nach Anspruch 12, wobei die Einschaltzeitperiode gemäß der folgenden Formel bestimmt wird:

$$ t_{on} = \frac{V_{bus}}{nV_o} \sqrt{L_m C_{eq}} $$

wobei $t_{on}$ die Einschaltzeitperiode des Hilfsschalters (S2) anzeigt, Vbus die Spannung des ersten Spannungssignals

anzeigt; $V_o$ die Spannung des zweiten Spannungssignals anzeigt; $C_{eq}$ einen Kapazitätswert einer parasitären Kapazität zwischen einem ersten Anschluss des Hauptschalters (S1) und Erde anzeigt; $L_m$ einen Induktionswert eines Induktors von einer primären Wicklung (T1) des Transformators (T) anzeigt; und n ein Wicklungsverhältnis des Transformators (T) anzeigt.

18. Vorrichtung nach Anspruch 12, wobei die Totzeit konstant ist.

19. Vorrichtung nach Anspruch 18, wobei die Totzeit gemäß der folgenden Formel bestimmt wird:

$$t_{delay} = \frac{\pi}{2}\sqrt{L_m C_{eq}}$$

wobei $t_{delay}$ die Totzeit anzeigt, $C_{eq}$ einen Kapazitätswert einer parasitären Kapazität zwischen dem ersten Anschluss des Hauptschalters (S1) und Erde anzeigt; und $L_m$ einen Induktionswert eines Induktors von einer primären Wicklung (T1) des Transformators (T) anzeigt.

20. Vorrichtung nach Anspruch 12, wobei der Zeitgeber (402) aufweist:

ein Stromsignalausgabemodul (311), das konfiguriert ist, um ein Stromsignal gemäß dem zweiten Spannungssignal durch Verwendung eines Proportionalkoeffizienten auszugeben;
einen ersten Kondensator (C1), der einen ersten Anschluss hat, der elektrisch an das Stromsignalausgabemodul (311) angeschlossen ist, und einen zweiten Anschluss hat, der geerdet ist;
einen ersten Steuerschalter (K1), der elektrisch an den ersten Kondensator (C1) parallel angeschlossen ist und der konfiguriert ist, um den ersten Kondensator (C1) zu steuern, um in einen Ladezustand durch das dritte Steuersignal SI3 einzutreten; und
ein Vergleichsmodul (312), das einen ersten Eingangsanschluss, der elektrisch an den ersten Anschluss des ersten Kondensators (C1) angeschlossen ist, und einen zweiten Eingangsanschluss hat, um eine Bezugsspannung entsprechend zu dem ersten Spannungssignal zu empfangen, wobei das Vergleichsmodul (312) konfiguriert ist, um die Bezugsspannung mit einer Spannung an dem ersten Kondensator (C1) zu vergleichen;
wobei das Vergleichsmodul (312) konfiguriert ist, um das erste Steuersignal auszugeben und der erste Kondensator (C1) den Ladezustand beendet, wenn die Spannung an dem ersten Kondensator (C1) die gleiche wie die Bezugsspannung ist, und
wobei die Einschaltzeitperiode eine Ladezeit des ersten Kondensators (C1) ist.

21. Vorrichtung nach Anspruch 20, wobei der Hauptschalter (S1) einen ersten Anschluss, der elektrisch an eine primäre Wicklung (T1) des Transformators (T) angeschlossen ist, und einen zweiten Anschluss hat, der geerdet ist, und der Proportionalkoeffizient wird gemäß der folgenden Formel erhalten:

$$\frac{C}{K} = \frac{\sqrt{L_m C_{eq}}}{n}$$

wobei C einen ersten Kapazitätswert des ersten Kondensators (C1) anzeigt; K den Proportionalkoeffizienten anzeigt; $C_{eq}$ einen Kapazitätswert einer parasitären Kapazität zwischen dem ersten Anschluss des Hauptschalters (S1) und Erde anzeigt; $L_m$ einen Induktionswert von einem Induktor der Primärwicklung (T1) des Transformators (T) anzeigt; und n ein Windungsverhältnis des Transformators (T) anzeigt.

22. Vorrichtung nach Anspruch 12, wobei die zweite Betriebseinrichtung (41) aufweist:
eine Totzeitsteuereinheit (412), die konfiguriert ist, um das erste Steuersignal SI1 zu empfangen, und um ein zweites Steuersignal SI2 gemäß dem ersten Steuersignal SI1 und der Totzeit auszugeben, wobei das zweite Steuersignal SI2 verwendet wird, um den Hauptschalter (S1) bei einer Nullspannungsschaltbedingung einzuschalten.

23. Vorrichtung nach Anspruch 22, wobei die Totzeitsteuereinheit (412) aufweist:

ein Totzeitbeschaffungsmodul (321), das konfiguriert ist, um die Totzeit zu erhalten; und
ein Ausgabemodul (322) für das zweite Steuersignal, das elektrisch an das Totzeitbeschaffungsmodul (321) angeschlossen ist, und konfiguriert ist, um das erste Steuersignal SI1 und die Totzeit zu erhalten und ein zweites Steuersignal SI2 auszugeben.

24. Vorrichtung nach Anspruch 12, wobei die Vorrichtung ferner aufweist:
einen Treiber (42), der konfiguriert ist, um das dritte Steuersignal SI3 und das erste Steuersignal SI1 zu empfangen, und um das erste Treibersignal Ssw auszugeben, wobei das erste Treibersignal Ssw mit einem ersten Niveau oder einer ersten Flanke durch das dritte Steuersignal SI3 erzeugt wird, um den Hilfsschalter (S2) einzuschalten, und das erste Treibersignal Ssw mit einem zweiten Pegel bzw. Niveau oder einer zweiten Flanke wird durch das erste Steuersignal SI1 erzeugt, um den Hilfsschalter (S2) auszuschalten.

**Revendications**

1. Procédé pour commander un convertisseur à transfert indirect, le convertisseur à transfert indirect incluant un commutateur principal (S1), un transformateur (T) et un commutateur auxiliaire (S2), le procédé comprenant :

l'obtention (201) d'un premier signal de tension et d'un second signal de tension, le premier signal de tension représentant une tension d'entrée (Vbus) du convertisseur à transfert indirect, et le second signal de tension représentant une tension de sortie (Vo) du convertisseur à transfert indirect ;
la commande (202) de l'allumage du commutateur auxiliaire, dans lequel la période d'allumage du commutateur auxiliaire est déterminée selon le premier signal de tension (Vbus) et le second signal de tension (Vo), dans lequel la commande (S202) de l'allumage du commutateur auxiliaire (S2) comprend en outre :

la génération (S202-1) d'un troisième signal de commande SI3 et l'allumage du commutateur auxiliaire (S2) selon le troisième signal de commande SI3, afin de générer un courant magnétisant (Im) ;
la génération (S202-2) d'un premier signal de commande SI1 selon le premier signal de tension (Vbus), le second signal de tension (Vo) et le troisième signal de commande SI3 ; et
l'extinction (S202-3) du commutateur auxiliaire (S2) selon le premier signal de commande SI1 à un instant (tl), auquel un produit du courant magnétisant (Im) du convertisseur à transfert indirect et d'une impédance caractéristique (Z) atteint le premier signal de tension (Vbus) ; et
l'allumage (203) du commutateur principal à condition ZVS, dans lequel le commutateur principal (S1) est allumé à un instant (t2) retardé pendant une durée d'un temps mort après l'extinction du commutateur auxiliaire.

2. Procédé de commande selon la revendication 1, dans lequel
le commutateur auxiliaire est un commutateur de serrage actif pour le convertisseur à transfert indirect, ou
le transformateur comprend en outre un enroulement auxiliaire connecté au commutateur auxiliaire en série, ou
le convertisseur à transfert indirect comprend en outre un commutateur redresseur synchrone en tant que commutateur auxiliaire.

3. Procédé de commande selon la revendication 2, dans lequel le premier signal de tension est obtenu en échantillonnant une tension négative à l'enroulement auxiliaire, et le second signal de tension est obtenu en échantillonnant une tension positive à l'enroulement auxiliaire.

4. Procédé de commande selon la revendication 2, dans lequel le premier signal de tension est obtenu en échantillonnant une tension sur le commutateur redresseur synchrone dans une condition d'état éteint.

5. Procédé de commande selon la revendication 1, dans lequel la période d'allumage est déterminée selon la formule suivante :

$$t_{on} = \frac{V_{bus}}{nV_o} \sqrt{L_m C_{eq}}$$

dans lequel $t_{on}$ indique la période d'allumage du commutateur auxiliaire, $V_{bus}$ indique une tension du premier signal de tension ; $V_o$ indique une tension du second signal de tension ; $C_{eq}$ indique une valeur de capacitance d'une capacitance parasite entre une première borne du commutateur principal et la masse ; $L_m$ indique une valeur d'inductance d'un inducteur d'un enroulement primaire du transformateur ; et n indique un rapport de spire du transformateur.

6. Procédé de commande selon la revendication 1, dans lequel le temps mort est constant.

7. Procédé de commande selon la revendication 6, dans lequel le temps mort est déterminé selon la formule suivante :

$$t_{delay} = \frac{\pi}{2}\sqrt{L_m C_{eq}}$$

dans lequel $t_{delay}$ indique le temps mort, $C_{eq}$ indique une valeur de capacitance d'une capacitance parasite entre la première borne du commutateur principal et la masse ; et $L_m$ indique une valeur d'inductance d'un inducteur d'un enroulement primaire du transformateur.

8. Procédé de commande selon la revendication 1, dans lequel l'allumage du commutateur principal (S203) comprend en outre :
la sortie d'un deuxième signal de commande selon le premier signal de commande et le temps mort et l'allumage du commutateur principal à une condition de commutation de tension zéro selon le deuxième signal de commande.

9. Procédé de commande selon la revendication 1, la génération du premier signal de commande selon le premier signal de tension, le second signal de tension et le troisième signal de commande (S202-2) comprenant en outre :

la sortie d'un signal de courant selon le second signal de tension en utilisant un coefficient proportionnel (S202-21) ;
la charge du premier condensateur avec le signal de courant, après qu'un premier condensateur entre dans un état de charge, par le troisième signal de commande (S202-22) ;
la comparaison d'une tension de référence à une tension au premier condensateur (S202-23) ; et
la sortie du premier signal de commande et la terminaison de l'état de charge du premier condensateur lorsque la tension au premier condensateur est la même que la tension de référence, dans lequel la tension de référence est une tension correspondant au premier signal de tension (S202-24).

10. Procédé de commande selon la revendication 9, dans lequel le commutateur principal a une première borne électriquement connectée à un enroulement primaire du transformateur, et une seconde borne mise à la masse, et le coefficient proportionnel est obtenu selon la formule suivante :

$$\frac{C}{K} = \frac{\sqrt{L_m C_{eq}}}{n}$$

dans lequel C indique une valeur de capacitance du premier condensateur ; K indique le coefficient proportionnel ; $C_{eq}$ indique une valeur de capacitance d'une capacitance parasite entre la première borne du commutateur principal et la masse ; $L_m$ indique une valeur d'inductance d'un inducteur d'un enroulement primaire (T1) du transformateur (T) ; et n indique un rapport de spire du transformateur.

11. Procédé de commande selon la revendication 1, dans lequel la commande de l'allumage du commutateur auxiliaire (S202) comprenant en outre :

la sortie d'un premier signal d'excitation avec un premier niveau ou un premier front selon le troisième signal de commande et l'allumage du commutateur auxiliaire selon le premier signal d'excitation avec le premier niveau ou un premier front ; et
la sortie du premier signal d'excitation avec un second niveau ou un second front selon le premier signal de commande et l'extinction du commutateur auxiliaire selon le premier signal d'excitation avec le second niveau ou un second front.

12. Appareil configuré pour commander un convertisseur à transfert indirect, le convertisseur à transfert indirect incluant un commutateur principal (S1), un transformateur (T) et un commutateur auxiliaire (S2), l'appareil comprenant :

un moyen d'échantillonnage configuré pour obtenir un premier signal de tension et un second signal de tension, le premier signal de tension représentant une tension d'entrée (Vbus) du convertisseur à transfert indirect, et le second signal de tension représentant une tension de sortie (Vo) du convertisseur à transfert indirect ;
un premier moyen de fonctionnement (40) configuré pour commander l'allumage du commutateur auxiliaire (S2), dans lequel une période d'allumage $t_{on}$ du commutateur auxiliaire (S2) est déterminée selon le premier signal de tension et le second signal de tension, dans lequel le premier moyen de fonctionnement (40) comprend :

une unité de signal (401) configurée pour générer un troisième signal de commande SI3, dans lequel le troisième signal de commande SI3 est utilisé pour allumer le commutateur auxiliaire (S2), afin de générer un courant magnétisant (Im) ; et
une minuterie (402) configurée pour recevoir le premier signal de tension, le second signal de tension et le troisième signal de commande SI3, et pour produire en sortie un premier signal de commande SI1, dans lequel le premier signal de commande SI1 est utilisé pour éteindre le commutateur auxiliaire (S2) à un instant (tl), auquel un produit du courant magnétisant (Im) du convertisseur à transfert indirect et d'une impédance caractéristique (Z) atteint le premier signal de tension (Vbus) ; et
un second moyen de fonctionnement (41) configuré pour allumer le commutateur principal (S1) à condition ZVS,

dans lequel le commutateur principal (S1) est allumé à un instant (t2) retardé pendant une durée d'un temps mort après l'extinction du commutateur auxiliaire (S2).

13. Appareil selon la revendication 12, dans lequel
le commutateur auxiliaire (S2) est un commutateur de serrage actif dans le convertisseur à transfert indirect, ou
le transformateur (T) comprend en outre un enroulement auxiliaire (T3) connecté au commutateur auxiliaire (S2) en série, ou
le convertisseur à transfert indirect comprend en outre un commutateur redresseur synchrone en tant que commutateur auxiliaire (S2).

14. Appareil selon la revendication 12, dans lequel le moyen d'échantillonnage est configuré pour obtenir le premier signal de tension et le second signal de tension en échantillonnant des tensions à une borne d'entrée et une borne de sortie du convertisseur à transfert indirect respectivement.

15. Appareil selon la revendication 12, dans lequel le moyen d'échantillonnage est configuré pour obtenir le premier signal de tension en échantillonnant une tension négative à l'enroulement auxiliaire (T3), et pour obtenir le second signal de tension en échantillonnant une tension positive à l'enroulement auxiliaire (T3).

16. Appareil selon la revendication 12, dans lequel le moyen d'échantillonnage est configuré pour obtenir le premier signal de tension en échantillonnant une tension sur le commutateur redresseur synchrone dans une condition d'état éteint.

17. Appareil selon la revendication 12, dans lequel la période d'allumage est déterminée selon la formule suivante :

$$t_{on} = \frac{V_{bus}}{nV_o}\sqrt{L_m C_{eq}}$$

dans lequel $t_{on}$ indique la période d'allumage du commutateur auxiliaire (S2), $V_{bus}$ indique la tension du premier signal de tension ; $V_o$ indique la tension du second signal de tension ; $C_{eq}$ indique une valeur de capacitance d'une capacitance parasite entre une première borne du commutateur principal (S1) et la masse ; $L_m$ indique une valeur d'inductance d'un inducteur d'un enroulement primaire (T1) du transformateur (T) ; et n indique un rapport de spire du transformateur (T).

**18.** Appareil selon la revendication 12, dans lequel le temps mort est constant.

**19.** Appareil selon la revendication 18, dans lequel le temps mort est déterminé selon la formule suivante :

$$t_{delay} = \frac{\pi}{2}\sqrt{L_m C_{eq}}$$

dans lequel $t_{delay}$ indique le temps mort, $C_{eq}$ indique une valeur de capacitance d'une capacitance parasite entre la première borne du commutateur principal (S1) et la masse ; et $L_m$ indique une valeur d'inductance d'un inducteur d'un enroulement primaire (T1) du transformateur (T).

**20.** Appareil selon la revendication 12, dans lequel la minuterie (402) comprend :

un module de sortie de signal de courant (311) configuré pour produire en sortie un signal de courant selon le second signal de tension en utilisant un coefficient proportionnel ;
un premier condensateur (C1) ayant une première borne électriquement connectée au module de sortie de signal de courant (311), et une seconde borne mise à la masse ;
un premier commutateur de commande (K1) électriquement connecté au premier condensateur (C1) en parallèle et configuré pour commander le premier condensateur (C1), pour entrer dans un état de charge, par le troisième signal de commande SI3 ; et
un module de comparaison (312) ayant une première borne d'entrée électriquement connectée à la première borne du premier condensateur (C1), et une seconde borne d'entrée pour recevoir une tension de référence correspondant au premier signal de tension, le module de comparaison (312) étant configuré pour comparer la tension de référence à une tension at le premier condensateur (C1) ;
dans lequel le module de comparaison (312) est configuré pour produire en sortie le premier signal de commande et le premier condensateur (C1) termine l'état de charge lorsque la tension au premier condensateur (C1) est la même que la tension de référence ; et
dans lequel la période d'allumage est un temps de charge du premier condensateur (C1).

**21.** Appareil selon la revendication 20, dans lequel le commutateur principal (S1) a une première borne électriquement connectée à un enroulement primaire (T1) du transformateur (T), et une seconde borne mise à la masse, et le coefficient proportionnel est obtenu selon la formule suivante :

$$\frac{C}{K} = \frac{\sqrt{L_m C_{eq}}}{n}$$

dans lequel C indique une valeur de capacitance du premier condensateur (C1) ; K indique le coefficient proportionnel ; $C_{eq}$ indique une valeur de capacitance d'une capacitance parasite entre la première borne du commutateur principal (S1) et la masse ; $L_m$ indique une valeur d'inductance d'un inducteur d'un enroulement primaire (T1) du transformateur (T) ;
et n indique un rapport de spire du transformateur (T).

**22.** Appareil selon la revendication 12, dans lequel le second moyen de fonctionnement (41) comprend :
une unité de commande de temps mort (412) configurée pour recevoir le premier signal de commande SI1, et pour produire en sortie un deuxième signal de commande SI2 selon le premier signal de commande SI1 et le temps mort, dans lequel le deuxième signal de commande SI2 est utilisé pour allumer le commutateur principal (S1) à une condition de commutation de tension zéro.

**23.** Appareil selon la revendication 22, dans lequel l'unité de commande de temps mort (412) comprend :

un module d'obtention de temps mort (321) configuré pour obtenir le temps mort ; et

un module de sortie de deuxième signal de commande (322) électriquement connecté au module d'obtention de temps mort (321), et configuré pour recevoir le premier signal de commande SI1 et le temps mort et pour produire en sortie un deuxième signal de commande SI2.

24. Appareil selon la revendication 12, dans lequel l'appareil comprend en outre :
un excitateur (42) configuré pour recevoir le troisième signal de commande SI3 et le premier signal de commande SI1, et pour produire en sortie le premier signal d'excitation Ssw, dans lequel le premier signal d'excitation Ssw avec un premier niveau ou un premier front est généré par le troisième signal de commande SI3 pour allumer le commutateur auxiliaire (S2) et le premier signal d'excitation Ssw avec un second niveau ou a second front est généré par le premier signal de commande SI1 pour éteindre le commutateur auxiliaire (S2).

Fig. 1

obtaining a first voltage signal and a second voltage signal, the first voltage signal representing an input voltage $V_{bus}$ of the flyback converter, and the second voltage signal representing an output voltage $V_o$ of the flyback converter

S201

controlling turn-on of the auxiliary switch S2, wherein the turn-on time period $t_{on}$ of the auxiliary switch S2 is determined according to the first voltage signal and the second voltage signal

S202

turning on the main switch at ZVS condition S1, wherein the main switch S1 is turned on at the time delayed for a duration of a dead time tdelay after turning off of the auxiliary switch S2

S203

Fig. 2

Fig. 3a

Fig. 3b

Fig. 4

Fig. 5

```
┌─────────────────────┐         ┌─────────────────────┐      SI2
│   Dead-Time Obtaining│────────▶│ Second-Control-Signal│─────────▶
│      Module 321      │         │   Output Module 322  │
└─────────────────────┘         └─────────────────────┘
                                          ▲
                                          │
                                     ─────┘
                                       SI1
```

Fig. 6

Fig. 7

Fig. 8

Fig. 9

Fig. 10

Fig. 11

**EP 3 591 826 B1**

**REFERENCES CITED IN THE DESCRIPTION**

**Patent documents cited in the description**

- EP 3107199 A
- US 2017264206 A
- US 2005073861 A
- US 2018062529 A
- US 2015003121 A